# EUROPEAN PATENT APPLICATION

(11) **EP 4 549 768 A1**
(43) Date of publication of application: **07.05.2025**
(21) Application number: 23831375.3
(22) Date of filing: 26.06.2023
(51) Int. Cl.: F16C 43/02, F16C 17/02

(54) **BEARING**

(30) Priority: 28.06.2022 JP 2022103631
(71) Applicant: Eagle Industry Co., Ltd., Minato-ku Tokyo 105-8587 (JP)
(72) Inventor: OKAMOTO Yuji, Tokyo 105-8587 (JP); TANAKA Tomohiro, Tokyo 105-8587 (JP); SAITO Kenichi, Tokyo 105-8587 (JP); KUNIMITSU Koshi, Tokyo 105-8587 (JP); OKAMOTO Tatsuya, Tokyo 105-8587 (JP)
(74) Representative: WSL Patentanwälte Partnerschaft mbB
(86) International application number: PCT/JP2023/023564
(87) International publication number: WO 2024/004935

(57) **Abstract**

There is provided a bearing in which bearing plate pieces can be easily disposed. A bearing 1 includes a body 10 having a tubular shape; a plurality of bearing plate pieces 20, 30, and 40 disposed in a circumferential direction on an inner periphery of the body 10; and a fixing device 10 disposed on the inner periphery of the body 10. The fixing device 50 includes a first member 51 having an inclined surface 51d, and second members 52, 53, 54 configured for moving along the inclined surface 51d of the first member 51.

## Description

### {TECHNICAL FIELD}

The present invention relates to a bearing, for example, a bearing disposed at a location where relative rotation occurs.

### {BACKGROUND ART}

In the field of rotating machines, bearings that support rotating shafts and the like have been known. Among such bearings, there is a bearing configured such that when a sliding portion which slidably supports a rotating shaft is worn or damaged, only the related location can be replaced.

For example, a bearing used in a propulsion device for a ship described in Patent Citation 1 mainly includes a body, a plurality of bearing plate pieces, and two stoppers. The body is formed in a cylindrical shape, and is attached to a stern tube into which a rotating shaft on which a propulsion propeller is provided is inserted. The plurality of bearing plate pieces are disposed in a circumferential direction along an inner peripheral surface of the body between the two stoppers disposed spaced apart from each other in the circumferential direction. Each of the bearing plate pieces includes a sliding member that bulges in a radially inward direction. Accordingly, the bearing described in Patent Citation 1 can support the rotating shaft so as to be relatively slidable. In addition, when wear, damage, or the like has occurred in any of the bearing plate pieces, the damaged bearing plate piece can be removed and replaced with a new bearing plate piece.

### {CITATION LIST}

### {Patent Literature}

Patent Citation 1: JP 3183964 U (Page 4, FIG. 5)

### {SUMMARY OF INVENTION}

### {Technical Problem}

In such a bearing of Patent Citation 1, the movement of the bearing plate pieces in the circumferential direction, which receive the rotation of the rotating shaft, is restricted by the stoppers. For that reason, the bearing as described in Patent Citation 1 can contribute to smooth rotation of the rotating shaft. By the way, from the viewpoint of preventing falling off, the plurality of bearing plate pieces need to be disposed between the stoppers, which are disposed spaced apart from each other in the circumferential direction, without a gap therebetween. Further, when the bearing is installed or assembled, some of the bearing plate pieces have to be cut such that the bearing plate pieces are disposed without a gap therebetween, so that assembly work has become complicated.

The present invention has been made in view of such problems, and an object of the present invention is to provide a bearing in which bearing plate pieces can be easily disposed.

### {Solution to Problem}

In order to solve the foregoing problems, a bearing according to the present invention is a bearing including: a body having a tubular shape; a plurality of bearing plate pieces arranged in a circumferential direction on an inner periphery of the body; and a fixing device disposed on the inner periphery of the body, wherein the fixing device includes a first member having an inclined surface that is inclined with respect to an axial direction in a radial directional view, and a second member configured for moving along the inclined surface of the first member and pressing the bearing plate pieces. According to the aforesaid feature of the present invention, by moving the second member toward one axial side relative to the first member, a circumferential width of the fixing device can be expanded, and a fastening force on the bearing plate pieces can be adjusted. For that reason, the bearing plate pieces can be easily fixed to the inner periphery of the body.

It may be preferable that the second member has an inclined surface facing the inclined surface of the first member, and a surface that is provided on a side opposite to the inclined surface of the second member in the circumferential direction, and that is parallel to a surface on a second member side of the bearing plate piece adjacent to the second member, and the inclined surface of the second member is equal to the inclined surface of the first member in inclination angle with respect to the axial direction. According to this preferable configuration, in a state where the respective inclined surfaces of the first member and the second member are in surface contact with each other, the second member moves in an axial direction relative to the first member, and presses the adjacent bearing plate piece in the circumferential direction. For that reason, the fixing device can stably adjust the fastening force on the bearing plate pieces.

It may be preferable that the first member is fixed to the body. According to this preferable configuration, the fixing device can easily move the second member in the axial direction relative to the first member.

It may be preferable that the second member has a shorter axial length than the bearing plate pieces. According to this preferable configuration, the second member is less likely to protrude further outward in the axial direction than the bearing plate pieces.

It may be preferable that a plurality of the second members are arranged in an axial direction, and are individually movable in the axial direction. According to this preferable configuration, the fixing device can adjust the fastening force for each of the second members.

It may be preferable that the bearing plate pieces are provided in a plurality of rows in the axial direction, and the second member is provided for each row of the bearing plate pieces. According to this preferable configuration, the fixing device can adjust the fastening force for each row of the bearing plate pieces with high accuracy.

It may be preferable that the fixing device has a circumferential width that is changeable by moving the second member relative to the first member in the axial direction. According to this preferable configuration, in the bearing, the bearing plate pieces can be easily replaced.

### {BRIEF DESCRIPTION OF DRAWINGS}

FIG. 1 is a view of a bearing according to a first embodiment of the present invention when viewed in an axial direction.
FIG. 2 is a view taken along arrow A in FIG. 1.
FIG. 3 is a view taken along arrow B in FIG. 2.
FIG. 4 is a view for describing bearing plate pieces disposed on a lower side in the first embodiment.
FIG. 5 is a view for describing the bearing plate piece in which protrusions are provided among the bearing plate pieces disposed on the lower side in the first embodiment.
FIG. 6 is a view for describing bearing plate pieces disposed on an upper side in the first embodiment.
FIG. 7 is a view for describing a second member disposed on an axial rear side in the first embodiment.
FIG. 8 is a view for describing a second member disposed at an axial center in the first embodiment.
FIG. 9 is a view for describing a second member disposed on an axial front side in the first embodiment.
FIG. 10 is a view for describing assembly of the bearing in the first embodiment.
FIG. 11 is a view for describing assembly of the bearing in the first embodiment.
FIG. 12 is a view for describing assembly of the bearing in the first embodiment.
FIG. 13 is a view for describing replacement of the bearing plate pieces in the first embodiment.
FIG. 14 is a view illustrating another fixing mode for the second member.
FIG. 15 is a view of a bearing according to a second embodiment of the present invention when viewed in the axial direction.
FIG. 16 is a view for describing a fixing device of a bearing according to a third embodiment of the present invention.

### {DESCRIPTION OF EMBODIMENTS}

Modes for implementing a bearing according to the present invention will be described below based on embodiments.

### {First embodiment}

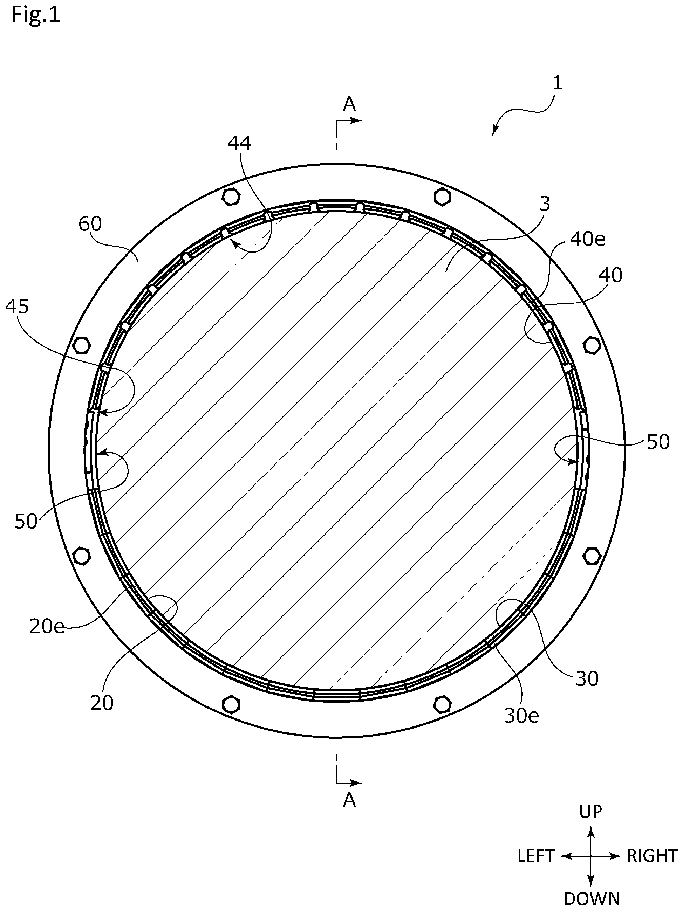

A bearing according to a first embodiment of the present invention will be described with reference to FIGS. 1 to 14. Hereinafter, the directions indicated by arrows in each drawing will be described as directions of the bearing. In addition, an axial direction of the bearing extends in a front-rear direction indicated by the arrow. In the axial direction, one axial side of the present invention is an axial rear side, and the other axial side is an axial front side.

As illustrated in FIG. 1, a bearing 1 is a water-lubricated stern tube bearing applied to a propulsion device in a ship. The bearing 1 supports a rotating shaft 3 penetrating through a stern tube. Incidentally, the bearing 1 is not limited to being applied to ships, and may be applied to automobiles or rotating machines such as general industrial machines.

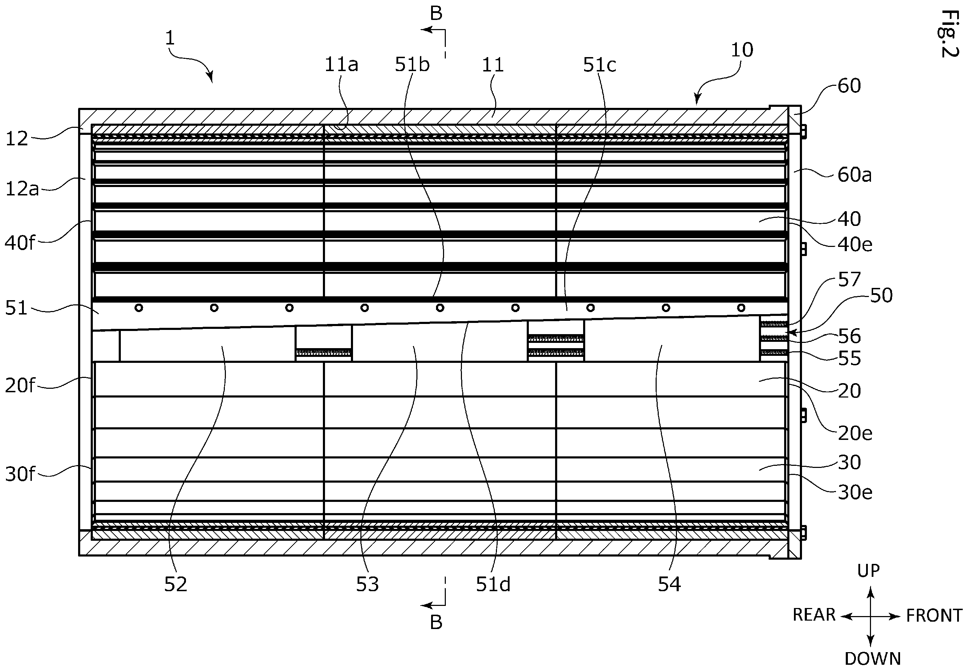

As illustrated in FIG. 2, the bearing 1 mainly includes a body 10, bearing plate pieces 20, 30, and 40, fixing devices 50, and a lid 60.

The body 10 is penetrated in the axial direction, namely, in the front-rear direction, and is formed in a cylindrical shape with an inner flange. The body 10 includes a base portion 11 and an inner flange portion 12.

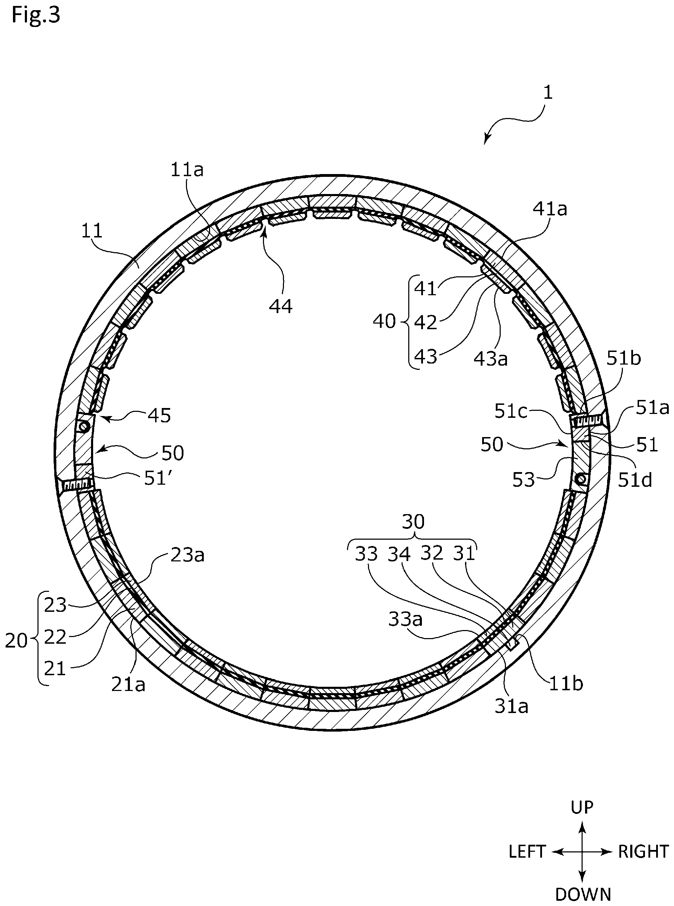

The base portion 11 is a cylindrical portion extending in the axial direction. In addition, a guide groove 11b (refer to FIG. 3) configured as a recess that is recessed from an inner peripheral surface 11a toward a radial outer side and that is open to the axial front side and a radial inner side is formed in the base portion 11. The guide groove 11b is formed at a lower portion of the base portion 11 and a lower right portion when viewed from the axial front side. Namely, as will be described in detail later, the guide groove 11b is formed on a vertically lower side, namely, at a position that is not at a lowermost portion but is shifted in phase from the lowermost portion in a state where the fixing devices 50 and 50 are disposed in a horizontal direction.

Incidentally, hereinafter, in describing a circumferential direction, a clockwise side or a counterclockwise side may be referred to, and unless otherwise specified, will be described as when viewed from the axial front side of the body 10. Furthermore, in relevant descriptions, the statement "when viewed from the axial front side of the body 10" may be omitted.

Similarly, in describing a radial direction, the radial inner side and the radial outer side may be referred to with reference to a radial direction of the body 10, and unless otherwise specified, will be described as being with reference to the radial direction of the body 10. Furthermore, in relevant descriptions, the statement "with reference to the radial direction of the body 10" may be omitted.

The inner flange portion 12 is an annular flange portion that is substantially orthogonal to a rear end of the base portion 11, and that extends toward the radial inner side.

In addition, the lid 60 can be attached to a front end of the base portion 11. The lid 60 is formed in an annular shape having a through-hole 60a having substantially the same diameter as a through-hole 12a of the inner flange portion 12 of the body 10. An axis of the lid 60 attached to the base portion 11 is disposed on substantially the same straight line as an axis of the inner flange portion 12.

Next, the bearing plate pieces 20, 30, and 40 will be described. In addition, the bearing plate pieces 20, 30, and 40 are each formed with substantially the same axial dimension L1.

Referring to FIGS. 3 to 5, the bearing plate pieces 20 and 30 are members that are long in the axial direction, and that are disposed and fixed to a lower portion of the body 10.

The bearing plate piece 20 is composed of a base member 21, an elastic member 22, and a sliding member 23.

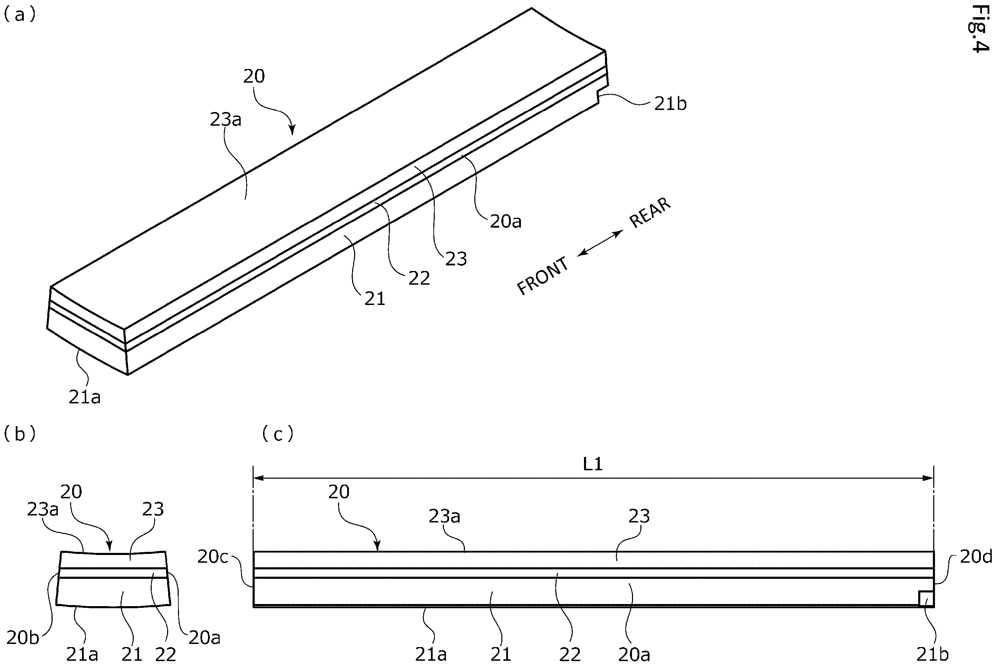

Referring to FIG. 4, the base member 21 is a substantially flat plate-shaped member extending in the axial direction, and is made of metal. An outer peripheral surface 21a of the base member 21 is curved along the inner peripheral surface 11a of the body 10 (refer to FIG. 3). Accordingly, when the bearing plate piece 20 is disposed on an inner periphery of the body 10, the outer peripheral surface 21a comes into surface contact with the inner peripheral surface 11a. Incidentally, the base member 21 is not limited to being made of metal, and may be made of, for example, resin.

In addition, a cutout portion 21b serving as an engagement portion of the bearing plate piece is formed on the radial outer side at an axial rear end of the base member 21 and on a side on which the base member 21 is pressed against movable pieces 52, 53, and 54 to be described later, namely, on the counterclockwise side. In other words, the cutout portion 21b is formed on an end surface 20a on the circumferential counterclockwise side of the bearing plate piece 20. The cutout portion 21b is open in a radially outward direction and to the counterclockwise side, and is recessed in a rectangular shape in each of a radially inward direction and a clockwise direction.

The elastic member 22 is a flat plate-shaped member extending in the axial direction, and is made of rubber. The elastic member 22 is fixed to an inner peripheral surface of the base member 21 using an adhesive. Incidentally, the elastic member 22 is not limited to being made of rubber, and the fixing method is also not limited.

The sliding member 23 is a substantially flat plate-shaped member extending in the axial direction, and is made of low-friction resin. The sliding member 23 is fixed to an inner peripheral surface of the elastic member 22 using an adhesive. An inner peripheral surface 23a of the sliding member 23 is curved along an outer peripheral surface of the rotating shaft 3. Incidentally, the sliding member 23 is not limited to being made of resin, and may be made of ceramic or the like as long as the ceramic or the like has low friction, and the fixing method is also not limited.

In addition, as illustrated in FIG. 4B, both end surfaces 20a and 20b of the bearing plate piece 20 in the circumferential direction extend in the radial direction of the body 10, namely, in a radiation direction.

Accordingly, a plurality of the bearing plate pieces 20 can be disposed in the circumferential direction in a state where the inner peripheral surfaces 23a of the sliding members 23 are smoothly connected to each other without generating a gap between the bearing plate pieces 20 and 20 adjacent to each other in the circumferential direction. Namely, the inner peripheral surfaces 23a of a plurality of the sliding members 23 disposed in the circumferential direction can be disposed in a curved shape with substantially the same radius. The same applies to a case where the bearing plate pieces 30 having substantially the same configuration are disposed adjacent to each other in the circumferential direction.

In addition, as illustrated in FIG. 4C, both end surfaces 20c and 20d of the bearing plate piece 20 in the axial direction are formed in a planar shape extending substantially parallel to the inner flange portion 12 of the body 10.

Accordingly, the plurality of bearing plate pieces 20 can be disposed in the axial direction in a state where the inner peripheral surfaces 23a of the sliding members 23 are smoothly connected to each other without generating a gap between the bearing plate pieces 20 and 20 adjacent to each other in the axial direction. Namely, the inner peripheral surfaces 23a of the plurality of sliding members 23 disposed in the axial direction can be disposed in a curved shape with substantially the same radius. The same applies to a case where the bearing plate pieces 30 having substantially the same configuration are disposed adjacent to each other in the axial direction.

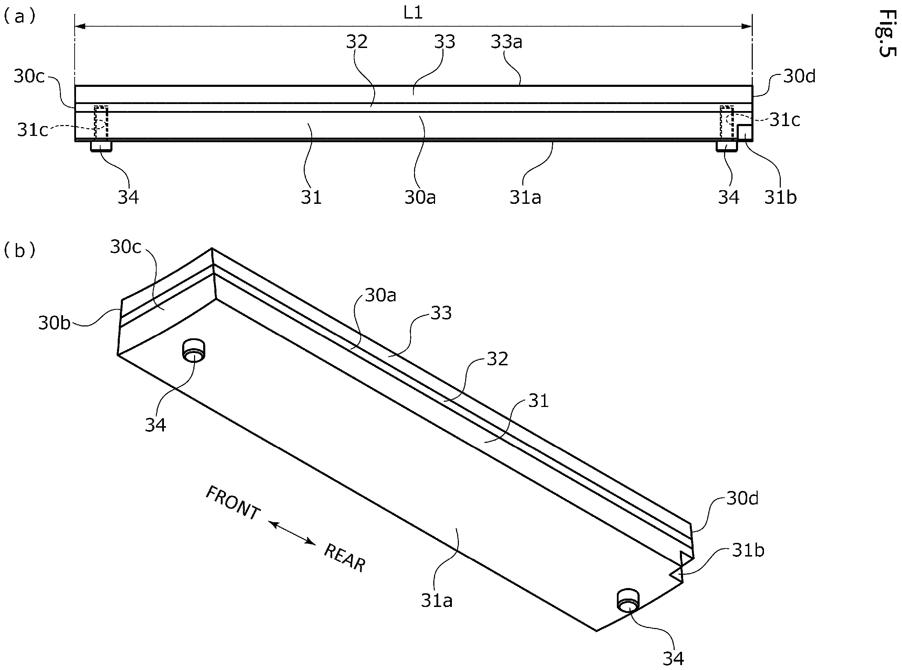

As illustrated in FIG. 5, the bearing plate piece 30 includes a base member 31, an elastic member 32, a sliding member 33, and two guide pins 34 and 34 configured as protrusions. In addition, a cutout portion 31b is formed on an end surface 30a on the circumferential counterclockwise side of the bearing plate piece 30.

Incidentally, the bearing plate piece 30 has substantially the same configuration as the bearing plate piece 20 except for the guide pins 34. For that reason, duplicate descriptions will be omitted. In addition, in the following description, the bearing plate piece 30 may also be referred to as a guide plate piece 30.

The guide pins 34 can be attached to female screw holes 31c and 31c penetrating through the base member 31. The female screw holes 31c and 31c are formed at a circumferential center of the base member 31, and are spaced apart from each other in the axial direction.

In addition, head portions of the guide pins 34 are loosely fitted into the guide groove 11b of the body 10. In addition, the head portions of the guide pins 34, which are loosely fitted into the guide groove 11b, are located closer to the radial inner side than a bottom of the guide groove 11b. In other words, the guide groove 11b is formed such that the head portions of the guide pins 34 can be loosely fitted thereinto. Incidentally, a guide pin including a head portion that can be loosely fitted into the guide groove 11b may be selected.

Accordingly, in a state where the guide pins 34 are loosely fitted into the guide groove 11b, similarly to the bearing plate piece 20, an outer peripheral surface 31a of the guide plate piece 30 can be brought into surface contact with the inner peripheral surface 11a of the body 10.

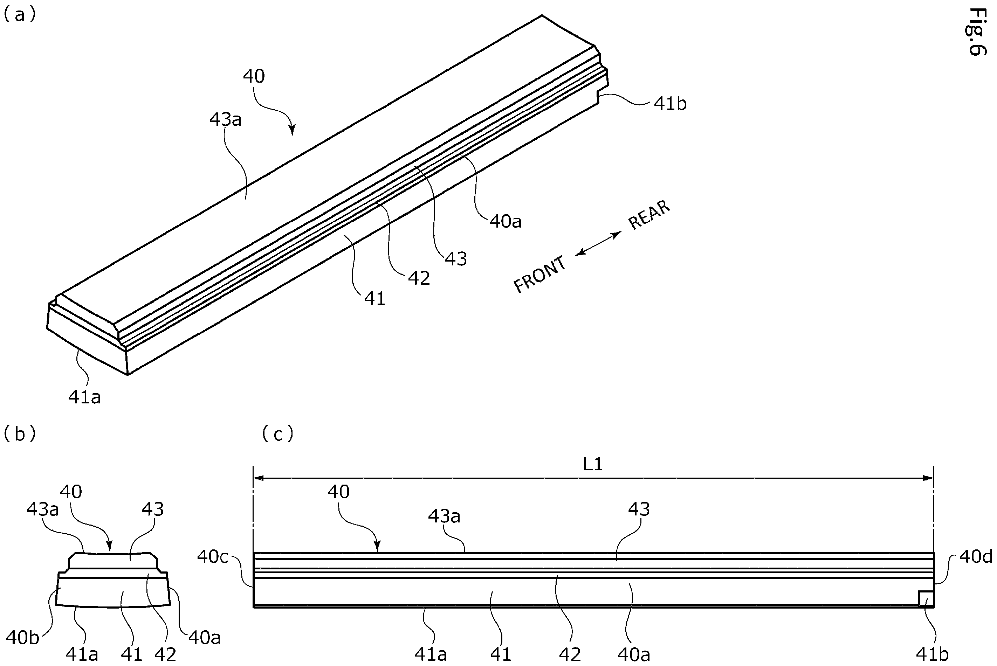

Referring to FIGS. 3 and 6, the bearing plate pieces 40 are members that are long in the axial direction, and that are disposed in an upper portion of the body 10.

Similarly to the bearing plate piece 20, the bearing plate piece 40 is composed of a base member 41, an elastic member 42, and a sliding member 43. In addition, a cutout portion 41b is formed on an end surface 40a on the circumferential counterclockwise side of the bearing plate piece 40.

Incidentally, description of configurations that are substantially the same as those of the bearing plate piece 20 will be omitted. In addition, in the following description, the bearing plate piece 40 may also be referred to as an upper plate piece 40.

As illustrated in FIG. 6B, both end surfaces 40a and 40b of the upper plate piece 40 in the circumferential direction are formed in a stepped shape when viewed in the axial direction.

Accordingly, as illustrated in FIGS. 1 and 3, a groove 44 extending in the axial direction is formed between the upper plate pieces 40 and 40 adjacent to each other in the circumferential direction. Similarly, a groove 45 extending in the axial direction is formed between the upper plate piece 40 and the fixing device 50 adjacent to each other in the circumferential direction.

Accordingly, in a state where the bearing 1 is mounted on the rotating shaft 3, a fluid can be introduced through the grooves 44 and 45 to be utilized for lubrication or cooling.

As illustrated in FIG. 2, the fixing device 50 mainly includes a fixed piece 51 serving as a first member; the movable pieces 52, 53, and 54 serving as second members; and bolts 55, 56, and 57.

The fixed piece 51 is a member that is long in the axial direction, and that is disposed and fixed to the body 10 in the horizontal direction. In addition, the fixed piece 51 has a right-angled trapezoidal shape that widens from the axial front side toward the axial rear side when viewed in the radial direction. In addition, the fixed piece 51 is formed with a thickness that causes an inner peripheral surface 51c to be disposed closer to the radial outer side than the inner peripheral surfaces 23a, 33a, and 43a of the bearing plate pieces 20, 30, and 40, in a state where the fixed piece 51 is fixed inside the body 10 (refer to FIG. 3).

As illustrated in FIG. 3, the fixed piece 51 has an outer peripheral surface 51a, a fixed surface 51b, the inner peripheral surface 51c, and an inclined surface 51d. The outer peripheral surface 51a is curved along the inner peripheral surface 11a of the body 10.

Returning to FIG. 2, the fixed surface 51b is provided on the counterclockwise side of the fixed piece 51, and extends in a planar shape in the axial direction. In addition, the fixed surface 51b is inclined along the radial direction of the body 10.

As illustrated in FIG. 2, the inclined surface 51d is provided on the clockwise side of the fixed piece 51. In addition, the inclined surface 51d is inclined with respect to the axial direction when viewed in the radial direction, and in detail, is inclined to the circumferential clockwise side and extends in a planar shape from the axial front side toward the axial rear side. Further, as illustrated in FIG. 3, the inclined surface 51d is inclined along the radial direction of the body 10 when viewed in the axial direction (refer to FIG. 3).

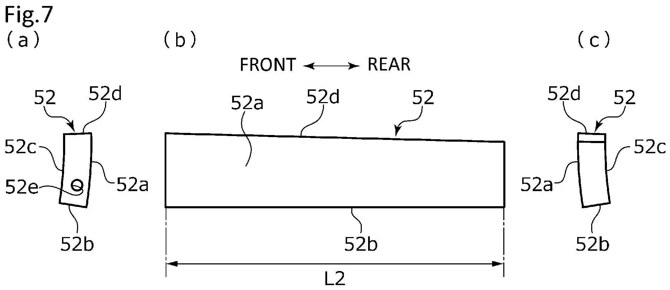

The movable pieces 52, 53, and 54 are members having a shorter axial dimension than the fixed piece 51 disposed on the body 10 in the horizontal direction. In addition, the movable pieces 52, 53, and 54 are each formed with substantially the same axial dimension L2. Further, the axial dimension L2 (refer to FIGS. 7 to 9) of each of the movable pieces 52, 53, and 54 is shorter than the axial dimension L1 of each of the bearing plate pieces 20, 30, and 40 (L1 > L2).

In addition, the movable pieces 52, 53, and 54 have a right-angled trapezoidal shape that narrows from the axial front side toward the axial rear side when viewed in the radial direction. The movable piece 52 is formed to be narrower than the movable pieces 53 and 54. The movable piece 53 is formed to be narrower than the movable piece 54. In the following description, the movable piece 52, the movable piece 53, and the movable piece 54 may be referred to as the rear movable piece 52, the middle movable piece 53, and the front movable piece 54, respectively.

In addition, the rear movable piece 52 is formed with a thickness that causes an inner peripheral surface 52c to be disposed in a curved shape with substantially the same radius as the inner peripheral surface 51c of the fixed piece 51, in a state where the rear movable piece 52 is fixed inside the body 10. The same applies to the other movable pieces 53 and 54.

As illustrated in FIGS. 7A and 7C, the rear movable piece 52 has an outer peripheral surface 52a, a fixed surface 52b, the inner peripheral surface 52c, and an inclined surface 52d. The outer peripheral surface 52a is curved along the inner peripheral surface 11a of the body 10.

As illustrated in FIG. 7B, the fixed surface 52b is provided on the counterclockwise side of the rear movable piece 52, and extends in a planar shape in the axial direction. In addition, the fixed surface 52b is inclined along the radial direction of the body 10.

The inclined surface 52d is provided on the clockwise side of the rear movable piece 52. In addition, as illustrated in FIG. 7B, the inclined surface 52d is inclined with respect to the axial direction when viewed in the radial direction, and in detail, is inclined to the circumferential clockwise side and extends in a planar shape from the axial front side toward the axial rear side. Further, as illustrated in FIGS. 7A and 7C, the inclined surface 52d is inclined along the radial direction of the body 10 when viewed in the axial direction.

In addition, as illustrated in FIG. 7A, a female screw hole 52e extending substantially parallel to the fixed surface 52b from a front end surface of the rear movable piece 52 toward the axial rear side is formed in the rear movable piece 52 to be closer to a fixed surface 52b side than a circumferential center.

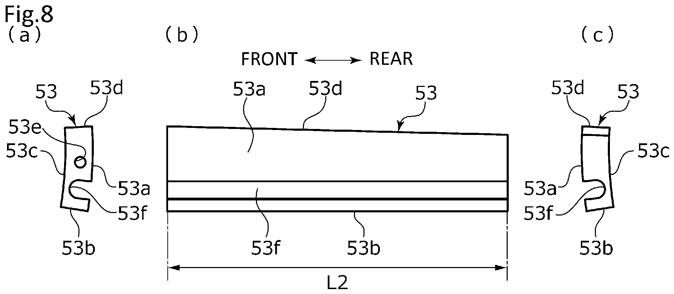

As illustrated in FIG. 8, similarly to the rear movable piece 52, the middle movable piece 53 has an outer peripheral surface 53a, a fixed surface 53b, an inner peripheral surface 53c, and an inclined surface 53d.

As illustrated in FIG. 8A, a female screw hole 53e and a through-groove 53f are formed in the middle movable piece 53. The female screw hole 53e is formed at a circumferential center of the middle movable piece 53, and extends substantially parallel to the fixed surface 53b from a front end surface of the middle movable piece 53 toward the axial rear side. The through-groove 53f is formed closer to a fixed surface 53b side than the circumferential center, and extends substantially parallel to the fixed surface 53b from the front end surface of the middle movable piece 53 toward the axial rear side. In addition, the through-groove 53f penetrates through the middle movable piece 53 in the axial direction, is open in the radially outward direction, and is recessed in the radially inward direction.

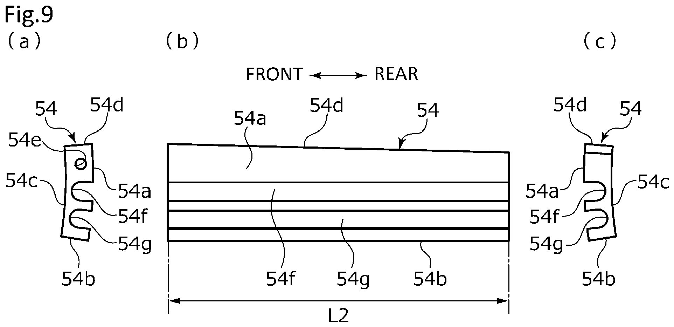

As illustrated in FIG. 9, similarly to the rear movable piece 52, the front movable piece 54 has an outer peripheral surface 54a, a fixed surface 54b, an inner peripheral surface 54c, and an inclined surface 54d.

As illustrated in FIG. 9A, a female screw hole 54e and through-grooves 54f and 54g are formed in the front movable piece 54. The female screw hole 54e is formed closer to an inclined surface 54d side than a circumferential center of the front movable piece 54, and extends substantially parallel to the fixed surface 54b from a front end surface of the front movable piece 54 toward the axial rear side. The through-groove 54f is formed at the circumferential center, and extends substantially parallel to the fixed surface 54b from the front end surface of the front movable piece 54 toward the axial rear side. The through-groove 54g is formed closer to a fixed surface 54b side than the circumferential center, and extends substantially parallel to the fixed surface 54b from the front end surface of the front movable piece 54 toward the axial rear side. In addition, the through-grooves 54f and 54g penetrate through the front movable piece 54 in the axial direction, are open in the radially outward direction, and are recessed in the radially inward direction.

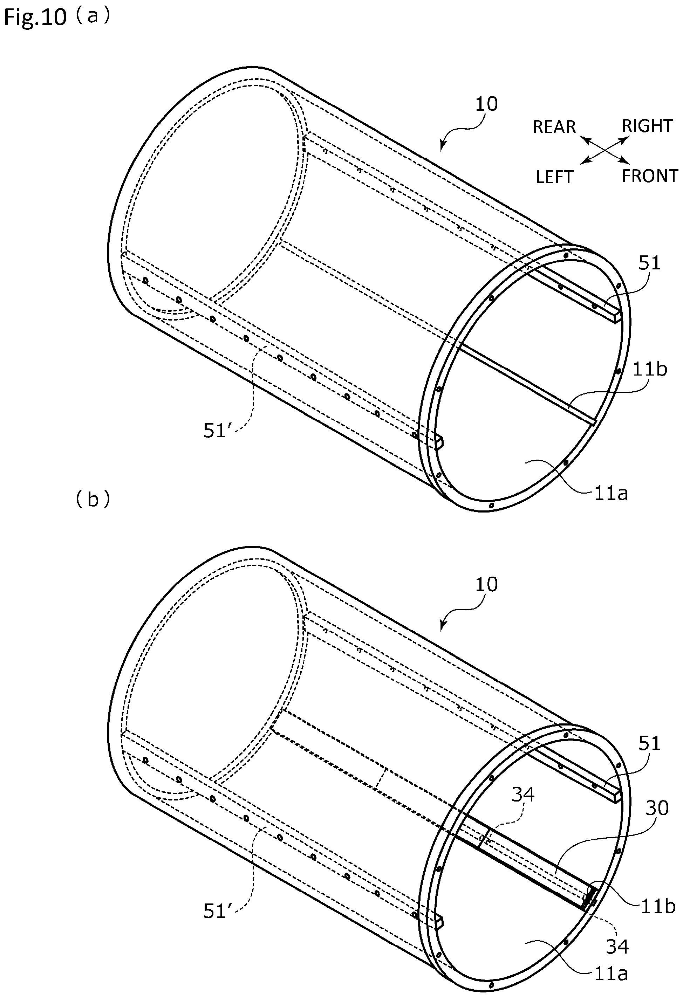

Next, a method for assembling the bearing 1 will be described. Incidentally, in this description, the fixed piece 51 located on a radial opposite side in FIG. 10 will be referred to as a fixed piece 51' on the opposite side.

First, referring to FIG. 10A, the fixed piece 51 is fixed to the inner peripheral surface 11a of the body 10 using a plurality of bolts (refer to FIG. 3) inserted from the radial outer side of the body 10. At this time, the fixed surface 51b of the fixed piece 51 is disposed on the circumferential counterclockwise side, and the inclined surface 51d is disposed on the circumferential clockwise side. Similarly, the fixed piece 51' on the opposite side is disposed to face the fixed piece 51 that is previously fixed, and is fixed using a plurality of bolts.

Referring to FIG. 10B, three guide plate pieces 30 are disposed in one line in the axial direction on the inner periphery of the body 10. At this time, each of the guide plate pieces 30 is oriented such that a side on which the cutout portion 31b (refer to FIG. 5) is formed is the rear side. Incidentally, regarding the other bearing plate pieces 20 and 40 to be described later, a side on which the respective cutout portions 21b and 41b are formed is the rear side.

In addition, for details regarding the disposition of the guide plate pieces 30, first, the head portions of the guide pins 34 of the first guide plate piece 30 are loosely fitted into the guide groove 11b of the body 10, and the guide plate piece 30 is moved toward the axial rear side, and is disposed on the rear side. Next, the second guide plate piece 30 is disposed at a middle position, and the third guide plate piece 30 is disposed on the front side. Accordingly, the head portions of the guide pins 34 are guided by the guide groove 11b, so that the three guide plate pieces 30 can be disposed in a straight line by simple attachment work.

In addition, the guide plate pieces 30 disposed in an axial rear row are in contact with the inner flange portion 12 of the body 10. Accordingly, the three guide plate pieces 30 are prevented from coming off to the rear side of the body 10, and are positioned in the axial direction. The same applies to the other bearing plate pieces 20 and 40.

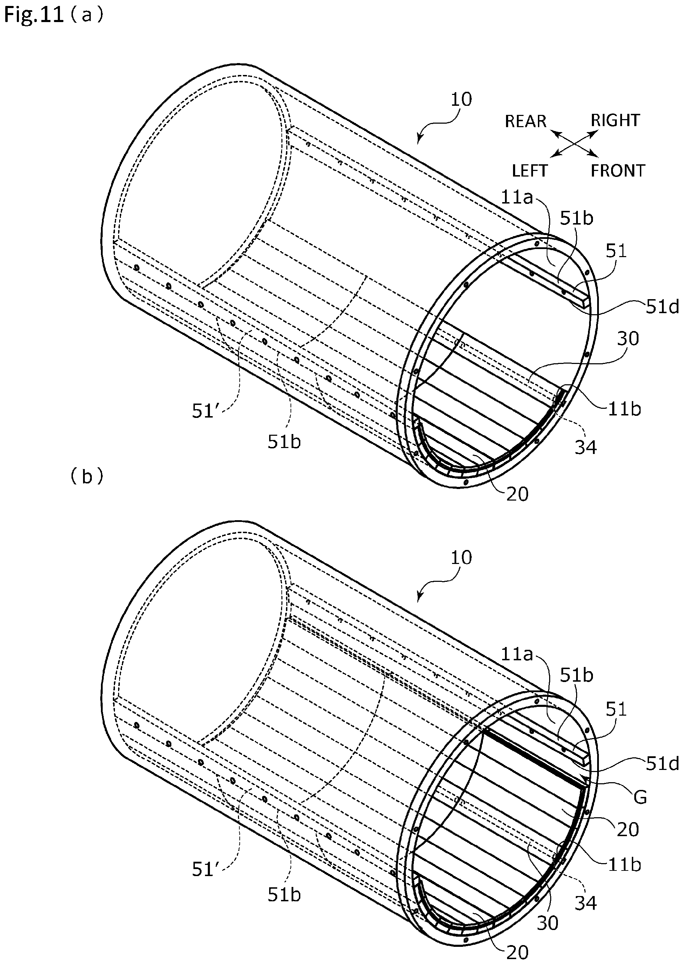

Referring to FIG. 11A, a plurality of the bearing plate pieces 20 (in the present embodiment, 33 pieces in total: three rows in the axial direction and 11 lines in the circumferential direction) are disposed on the circumferential clockwise side of the guide plate pieces 30.

In detail, first, three bearing plate pieces 20 are disposed in one line in the axial direction at a circumferential center of the body 10, namely, at a lower end position on the inner periphery of the body 10. Next, other bearing plate pieces 20 are disposed on both circumferential sides of the bearing plate pieces 20 located at the circumferential center.

At this time, each of the bearing plate pieces 20 on both circumferential sides receives a force toward the circumferential center due to its own weight.

This step is repeated to dispose the bearing plate pieces 20 to a position where the bearing plate pieces 20 come into contact with the guide plate pieces 30. Thereafter, the bearing plate pieces 20 are disposed in the circumferential direction on the circumferential clockwise side in the body 10, namely, at left positions on the inner periphery of the body 10 until the bearing plate pieces 20 come into contact with or approach the fixed surface 51b of the fixed piece 51' on the opposite side.

At this time, the guide plate pieces 30 move slightly counterclockwise. The reason is that the guide pins 34 are loosely fitted in the guide groove 11b.

Incidentally, since the bearing plate pieces 20 have a circumferential width that is substantially constant in the axial direction, it is easy to insert and dispose the bearing plate pieces 20 along the axial direction.

Referring to FIG. 11B, subsequently, a plurality of the bearing plate pieces 20 (in the present embodiment, nine pieces in total: three rows in the axial direction and three lines in the circumferential direction) are disposed on the circumferential counterclockwise side of the guide plate pieces 30. The bearing plate pieces 20 are in contact with the guide plate pieces 30 or bearing plate pieces 20 due to their own weight.

In such a manner, each of the bearing plate pieces 20 is disposed and roughly positioned.

Next, the fastening and fixing of the bearing plate pieces 20 and 30 by the fixing device 50 will be described.

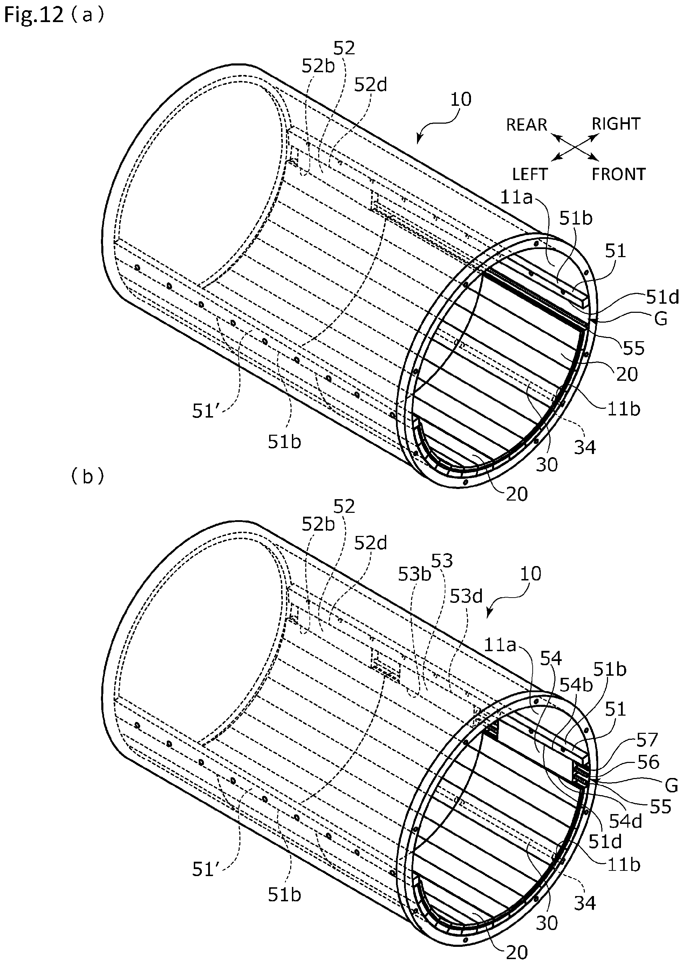

Referring to FIG. 12, the bolt 55 is screwed into the female screw hole 52e of the rear movable piece 52. Incidentally, the bolt 55 is a bolt having a longer axial dimension than the other bolts 56 and 57.

Next, the bolt 55 is gripped or the like, and the rear movable piece 52 is inserted into a gap G between the fixed piece 51 and the bearing plate pieces 20 disposed at an end on the circumferential counterclockwise side. The inclined surface 52d of the rear movable piece 52 comes into surface contact with the inclined surface 51d of the fixed piece 51, and the fixed surface 52b of the rear movable piece 52 comes into surface contact with the end surface 20a (refer to FIG. 4) on the circumferential counterclockwise side of the bearing plate piece 20 on the rear side.

In this state, a front end of the bolt 55 protruding from the body 10 toward the axial front side is struck with a hammer or the like to press-fit the bolt 55 such that the amount of press-fitting in the axial direction reaches a predetermined amount. Hereinafter, details will be described. Incidentally, in the following description, unless otherwise specified, the statement "the amount of press-fitting in the axial direction becomes the predetermined amount" will be stated as "reaches the predetermined amount".

The inclined surface 52d of the rear movable piece 52 has substantially the same inclination angle as the inclined surface 51d of the fixed piece 51. For that reason, by bringing the inclined surfaces 52d and 51d into surface contact with each other, the fixed surface 52b of the rear movable piece 52 is made substantially parallel to the fixed surface 51b of the fixed piece 51.

The further the rear movable piece 52 is press-fitted toward the axial rear side, the further the rear movable piece 52 is guided by the fixed piece 51 to advance toward the circumferential clockwise side. Namely, a circumferential width between the fixed surface 52b of the rear movable piece 52 and the fixed surface 51b of the fixed piece 51 expands.

Accordingly, the fixing device 50 can press all the bearing plate pieces 20 and 30, which are disposed in one row in the circumferential direction at an axial rear of the body 10, toward the fixed surface 51b of the fixed piece 51' on the opposite side using the rear movable piece 52. In other words, the bearing plate pieces 20 and 30 are fastened in the circumferential direction by the fixing device 50 and the fixed surface 51b of the fixed piece 51' on the opposite side.

In addition, the rear movable piece 52 is press-fitted to a position where all the bearing plate pieces 20 and 30 disposed in one row in the circumferential direction are sufficiently fastened, namely, until a predetermined amount is reached. In this state, the front end of the bolt 55 is substantially flush with the front end surface of the body 10.

If necessary, the front end of the bolt 55 may be cut or ground to adjust the axial length. In addition, the amount of screwing of the bolt 55 into the female screw hole 52e may be adjusted. The same applies to the bolts 56 and 57.

Referring to FIG. 12B, similarly to the rear movable piece 52, the bolt 56 is screwed into the female screw hole 53e of the middle movable piece 53. Incidentally, the bolt 56 is a bolt having a longer axial dimension than the bolt 57.

Next, the middle movable piece 53 is inserted into the gap G. At this time, the bolt 55 is disposed in the through-groove 53f of the middle movable piece 53. Then, similarly to the rear movable piece 52, the middle movable piece 53 is press-fitted.

At this time, since the front end of the bolt 55 is aligned with the front end surface of the body 10, the striking of the front end of the bolt 56 with a hammer or the like is prevented from being hindered. In addition, a cross-sectional area of the through-groove 53f is larger than a cross-sectional area of the bolt 55. For that reason, even when the middle movable piece 53 advances toward the circumferential clockwise side, the bolt 55 is prevented from coming into contact with the middle movable piece 53.

Thereafter, the middle movable piece 53 is press-fitted to a position where all the bearing plate pieces 20 and 30 disposed in one row in the circumferential direction at an axial center of the body 10 are sufficiently fastened, namely, until a predetermined amount is reached.

Next, similarly to the rear movable piece 52, the bolt 57 is screwed into the female screw hole 54e of the front movable piece 54.

Next, the front movable piece 54 is inserted into the gap G. At this time, the bolt 56 is disposed in the through-groove 54f of the front movable piece 54, and the bolt 55 is disposed in the through-groove 54g. Then, similarly to the rear movable piece 52 and the middle movable piece 53, the front movable piece 54 is press-fitted.

At this time, since the front ends of the bolts 55 and 56 are aligned with the front end surface of the body 10, the striking of a front end of the bolt 57 with a hammer or the like is prevented from being hindered.

In addition, a cross-sectional area of the through-grooves 54f and 54g is larger than a cross-sectional area of the bolts 55 and 56. For that reason, even when the front movable piece 54 advances toward the circumferential clockwise side, the bolts 55 and 56 are prevented from coming into contact with the front movable piece 54.

Thereafter, the front movable piece 54 is press-fitted to a position where all the bearing plate pieces 20 and 30 disposed in one row in the circumferential direction at an axial front of the body 10 are sufficiently fastened, namely, until a predetermined amount is reached.

Accordingly, in a lower half of the bearing 1, the inner peripheral surfaces 23a and 33a of the bearing plate pieces 20 and 30 can be disposed in substantially the same curved shape without a gap therebetween. Namely, a substantially flush and continuous sliding surface can be formed using a plurality of the bearing plate pieces 20 and 30 that are divided in the axial direction and the circumferential direction. Accordingly, the rotating shaft 3 that exerts a relatively large force downward due to its own weight can be effectively supported.

Incidentally, since a method for attaching the upper plate pieces 40 is the same as that of the bearing plate pieces 20 and 30, the method will be briefly described. First, the body 10 is turned upside down. Next, a plurality of the upper plate pieces 40 (in the present embodiment, 45 pieces in total) are disposed between the fixed pieces 51 and 51'. Between the upper plate pieces 40 and the fixed piece 51' on the opposite side, each of the movable pieces 52, 53, and 54 is press-fitted by a predetermined amount, and is pressed against the fixed surface 51b of the fixed piece 51. In such a manner, the upper plate pieces 40 are fixed to the inner periphery of the body 10.

Finally, referring to FIG. 1, the lid 60 is brought into surface contact with the front end surface of the body 10, and is fixed using bolts. In addition, the front end of each of the bolts 55, 56, and 57 comes into contact with the lid 60. Accordingly, the bolts 55, 56, and 57 are restricted from moving toward the axial front side, namely, in a coming-off direction. For that reason, the fixing device 50 can maintain a fastening force on each of the bearing plate pieces 20, 30, and 40.

Incidentally, after the lid 60 is fixed to the body 10, the bolts 55, 56, and 57 may be rotated through the through-holes 60a of the lid 60 to adjust dimensions by which the bolts 55, 56, and 57 are screwed into the corresponding female screw holes 52e, 53e, and 54e, and to bring the front ends of the bolts 55, 56, and 57 into contact with the lid 60.

The bearing 1 can be assembled as described above. Incidentally, the assembly procedure is not limited to the above-described procedure, and may be changed as appropriate. For example, when the bearing plate pieces 20 are disposed, the bearing plate pieces 20 may be disposed while being pressed toward the guide plate pieces 30. In such a method, each of the bearing plate pieces 20 can be reliably disposed along the axial direction.

The assembled bearing 1 is inserted onto the rotating shaft 3.

Here, as illustrated in FIGS. 1 and 2, axially inclined surfaces 20e, 30e, and 40e that are inclined to the radial inner side from the axial front side toward the axial rear side are formed on the radial inner side of the respective front end surfaces 20c, 30c, and 40c of the bearing plate pieces 20, 30, and 40 located at the axial front.

Similarly, axially inclined surfaces 20f, 30f, and 40f that are inclined to the radial inner side from the axial rear side toward the axial front side are formed on the radial inner side of the respective rear end surfaces 20d, 30d, and 40d of the bearing plate pieces 20, 30, and 40 located at the axial rear.

Due to the axially inclined surfaces 20e, 30e, 40e, 20f, 30f, and 40f, it is easy to insert the bearing 1 onto the rotating shaft 3.

Next, a method for replacing the bearing plate pieces 20 and 30 of the bearing 1 that are particularly frequently replaced will be described. In this description, it is assumed that the bearing 1 remains inserted onto the rotating shaft 3.

First, the lid 60 is removed from the body 10. Next, the bolt 57 is gripped using a jig, and the front movable piece 54 is pulled out toward the axial front side. Similarly, the middle movable piece 53 and the rear movable piece 52 are pulled out in order.

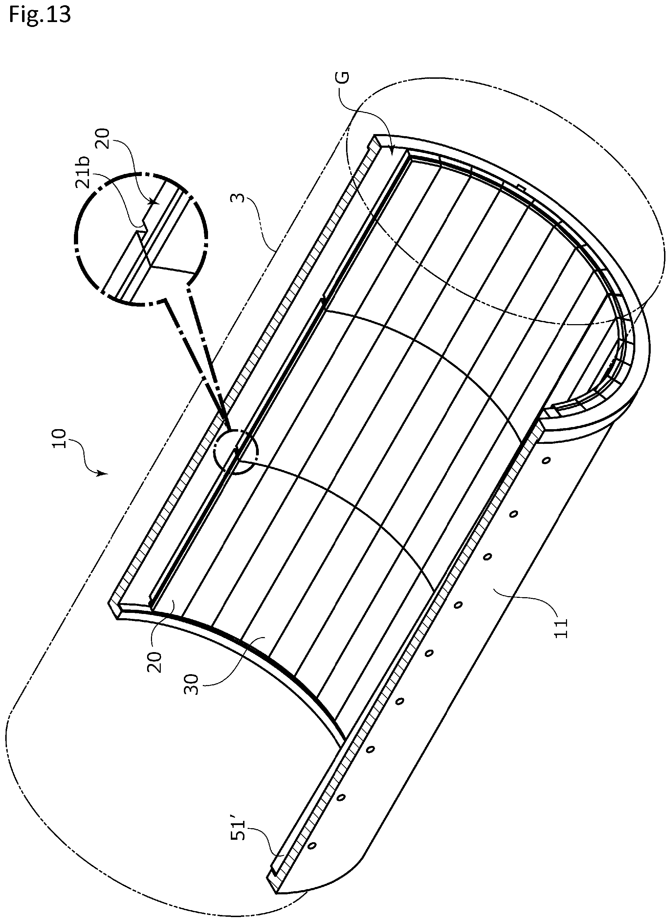

Accordingly, as illustrated in FIG. 13, the gap G serving as a work space into which a jig can be inserted is secured between the fixed piece 51 (omitted in this figure) and the bearing plate pieces 20 disposed at an end on the circumferential counterclockwise side. In addition, each of the cutout portions 21b faces the gap G. Accordingly, the jig can be engaged with each of the cutout portions 21b. In addition, when the jig is engaged with the cutout portion 21b, there is no need to adjust the orientation and the like of the bearing plate pieces 20.

Then, the bearing plate piece 20 can be extracted by engaging the jig with the cutout portion 21b of the bearing plate piece 20 and then pulling the jig toward the front side. In addition, similarly, the guide plate piece 30 can also be extracted by operating the jig engaged with the cutout portion 31b.

This step is repeatedly performed until all the bearing plate pieces 20 and 30 that need to be replaced are extracted. Then, the replacement work for the bearing plate pieces 20 and 30 is completed by inserting new bearing plate pieces 20 and 30 in the same manner as during assembly, fastening the corresponding rows using the movable pieces 52, 53, and 54, and then attaching the lid 60 to the body 10.

Incidentally, since the upper plate piece 40 can also be extracted by operating the jig engaged with the cutout portion 41b, the upper plate piece 40 can be replaced in the same procedure as the bearing plate pieces 20 and 30. Preferably, in order to avoid the occurrence of unintended misalignment or separation while the bearing 1 is mounted on the rotating shaft 3, the bearing 1 may be removed from the rotating shaft 3.

As described above, in the bearing 1 of the present embodiment, a pair of the fixing devices 50 are disposed between the bearing plate pieces 20 and 30 and the upper plate pieces 40 disposed in one row in the circumferential direction.

By moving the movable pieces 52, 53, and 54 of one fixing device 50 toward the axial rear side relative to the fixed piece 51, the fixing device 50 can adjust the fastening force on the bearing plate pieces 20 and 30. In addition, machining tolerances in the bearing plate pieces 20 and 30 can also be absorbed. For that reason, the bearing plate pieces 20 and 30 can be easily disposed on the inner periphery of the body 10.

Incidentally, since the description of an upper plate piece 40 side is the same as the description of the side of the bearing plate pieces 20 and 30, the description of the upper plate piece 40 side will be omitted. In the following description, unless otherwise specified, duplicate descriptions will be omitted.

In addition, the respective inclined surfaces 52d, 53d, and 54d of the movable pieces 52, 53, and 54 have the same inclination angle as the inclined surface 51d of the fixed piece 51. Accordingly, in a state where the respective inclined surfaces 52d, 53d, and 54d of the movable pieces 52, 53, and 54 are in surface contact with the inclined surface 51d of the fixed piece 51, the movable pieces 52, 53, and 54 move in the axial direction relative to the fixed piece 51.

At this time, the respective fixed surfaces 52b, 53b, and 54b of the movable pieces 52, 53, and 54 move while maintaining a state where the fixed surfaces 52b, 53b, and 54b are substantially parallel to the fixed surface 51b of the fixed piece 51, and press the adjacent bearing plate pieces 20 and 30 in the circumferential direction. In addition, a dimension by which the respective fixed surfaces 52b, 53b, and 54b of the movable pieces 52, 53, and 54 advance in the circumferential direction is proportional to a dimension by which the movable pieces 52, 53, and 54 move in the axial direction.

Accordingly, the fixing device 50 can stably adjust the fastening force on the bearing plate pieces 20 and 30.

In addition, each of the fixed surfaces 52b, 53b, and 54b is brought into surface contact with the end surface 20a of the adjacent bearing plate piece 20. Accordingly, the bearing plate pieces 20 and 30 disposed in one row in the axial direction can be substantially evenly pressed in the circumferential direction.

In addition, since the fixed piece 51 of the fixing device 50 is fixed to the body 10, the movable pieces 52, 53, and 54 are easily movable in the axial direction relative to the fixed piece 51.

In addition, the movable pieces 52, 53, and 54 have a shorter axial length than the bearing plate pieces 20 and 30. For that reason, the movable pieces 52, 53, and 54 are less likely to protrude further outward in the axial direction than the bearing plate pieces 20 and 30.

In addition, the movable pieces 52, 53, and 54 are less likely to interfere with each other when press-fitted into the gap G. Accordingly, the fastening force can be reliably applied to the bearing plate pieces 20 and 30.

In addition, the movable pieces 52, 53, and 54 are individually movable in the axial direction. Accordingly, the fixing device 50 can adjust the fastening force for each of the movable pieces 52, 53, and 54. For example, in a case where a plurality of bearing plate pieces having substantially the same axial dimension as the fixed piece 51 are disposed in one row in the circumferential direction, the fixing device 50 can individually adjust a fastening force on the bearing plate pieces at a plurality of locations in the axial direction. For that reason, the bearing plate pieces can be fastened with high accuracy.

The movable pieces 52, 53, and 54 are disposed one by one in corresponding rows among the plurality of bearing plate pieces 20 and 30 disposed in three rows in the circumferential direction. For that reason, the fixing device 50 can adjust the fastening force for each row of the bearing plate pieces 20 and 30 with high accuracy.

In addition, the fixing device 50 can reduce a circumferential width by moving the movable pieces 52, 53, and 54 toward the axial front side relative to the fixed piece 51. Accordingly, the fixing device 50 can reduce the fastening force on the bearing plate pieces 20 and 30 disposed in one row in the circumferential direction, and release the fastening of the bearing plate pieces 20 and 30. For that reason, in the bearing 1, the bearing plate pieces 20 and 30 can be easily replaced.

In addition, in the fixing device 50, the front movable piece 54, the middle movable piece 53, and the rear movable piece 52 can be individually pulled out in order. Accordingly, for example, when only one of all the bearing plate pieces 20 and 30 disposed in one row in the circumferential direction at the axial front is replaced, the other movable pieces 52 and 53 may not be pulled out. Namely, the efficiency of replacement work can be improved.

In addition, in a state where the bearing plate pieces 20 and 30 are disposed in one row in the circumferential direction, the guide plate piece 30 restricts a plurality of the bearing plate pieces 20, which are disposed closer to the circumferential clockwise side than the guide plate piece 30, from moving toward the circumferential counterclockwise side. Accordingly, the gap G for press-fitting the movable pieces 52, 53, and 54 can be reliably secured. For that reason, it is easy to press-fit the movable pieces 52, 53, and 54.

On the other hand, for example, in a case where the guide plate piece 30 is not provided, the plurality of bearing plate pieces 20 disposed in one row in the circumferential direction are movable along the inner peripheral surface 11a of the body 10. Accordingly, the width of the gap G before the movable pieces 52, 53, and 54 are press-fitted is narrowed by the movement of the plurality of bearing plate pieces 20 toward the circumferential counterclockwise side, so that press-fitting is hindered.

Incidentally, the configuration in which each of the bolts 55, 56, and 57 is prevented from coming off due to the front end of each of the bolts 55, 56, and 57 coming into contact with the lid 60 has been described; however, the present invention is not limited thereto, and the coming-off prevention structure may be changed as appropriate.

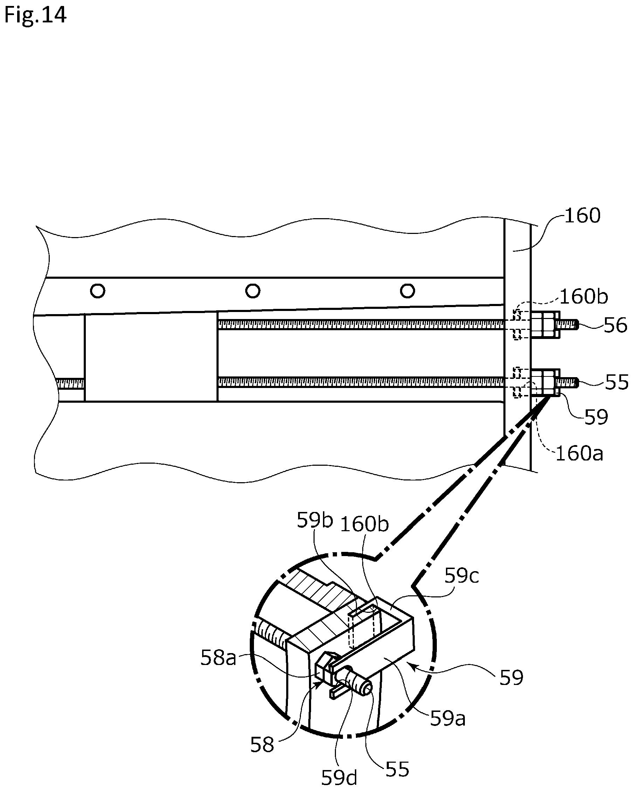

For example, as illustrated in FIG. 14, the bolts 55 and 56 may be prevented from coming off by a lid 160, lock nuts 58, and clips 59. Incidentally, in this description, it is assumed that the bearing plate pieces are disposed in two rows in the axial direction.

In detail, through-holes 160a and rectangular recesses 160b are formed in the lid 160. The through-holes 160a penetrate through the lid 160 in a thickness direction, namely, in the axial direction. The rectangular recesses 160b are recessed in a rectangular shape to the radial inner side from an outer peripheral surface of the lid 160, and are open to the radial outer side.

Each of the clips 59 is formed in a U shape, and includes a nut-side engagement portion 59a, a lid-side engagement portion 59b, and a connecting portion 59c. The nut-side engagement portion 59a is formed in a substantially U shape when viewed in the axial direction such that the bolts 55 and 56 can be externally fitted thereto. In addition, the nut-side engagement portion 59a curves toward the front side as the nut-side engagement portion 59a approaches an end on the radial inner side. The lid-side engagement portion 59b is formed in a rectangular shape when viewed in the axial direction. The connecting portion 59c connects the nut-side engagement portion 59a and the lid-side engagement portion 59b.

Next, a method for preventing the bolts 55 and 56 from coming off, the bolts 55 and 56 being struck by a predetermined amount with a hammer or the like, will be described. First, the bolts 55 and 56 are inserted into the corresponding through-holes 160a to fasten the lid 160 to the body 10. Next, in a state where nuts 58a on the rear side are brought into contact with the lid 160, the lock nuts 58 are fixed to the corresponding bolts 55 and 56. Thereafter, the nut-side engagement portions 59a are brought into contact with the lock nuts 58 by inserting the lid-side engagement portions 59b of the clips 59 into the rectangular recesses 160b of the lid 160.

In such a manner, since the lock nuts 58 are restricted from moving in the coming-off direction by the clips 59, the bolts 55 and 56 are prevented from coming off.

In addition, instead of the coming-off prevention by the clip 59, one nut 58a disposed on the axial rear side of the lock nut 58 may be fixed to the lid 160 by welding. In addition, an extension portion extending to the outside may be formed on one nut 58a, and the extension portion may be fixed to the lid 160 using a bolt or the like.

### {Second embodiment}

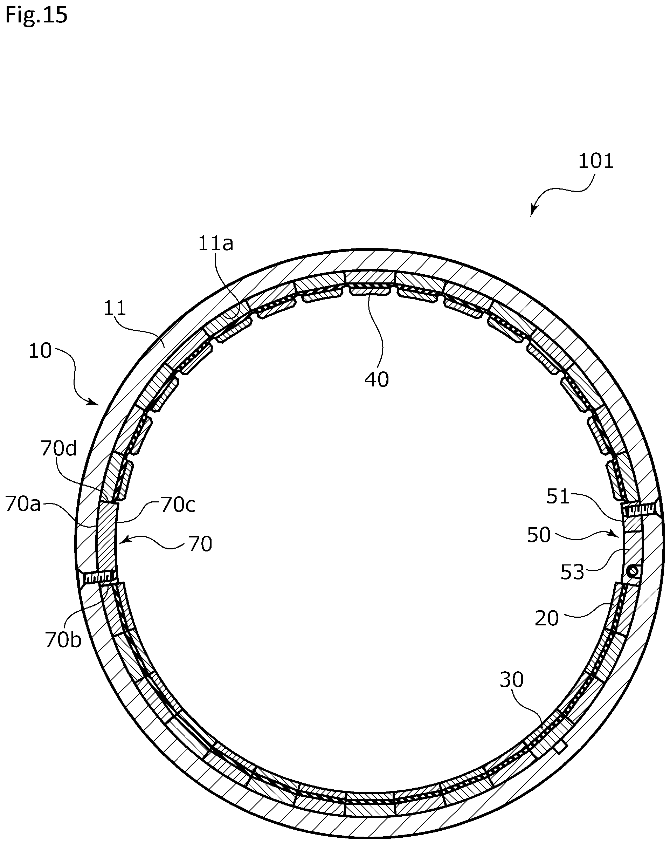

Next, a bearing according to a second embodiment of the present invention will be described with reference to FIG. 15. Incidentally, the description of configurations that are the same as and overlap with the configurations of the first embodiment will be omitted.

In a bearing 101 of the second embodiment, the fixing device 50 and a connecting piece 70 are disposed on the inner periphery of the body 10 to face each other.

The connecting piece 70 is a substantially flat plate-shaped member extending in the axial direction, and is made of metal. An outer peripheral surface 70a of the connecting piece 70 is curved along the inner peripheral surface 11a of the body 10. Incidentally, the connecting piece 70 is not limited to being made of metal, and may be made of resin.

In addition, both end surfaces of the connecting piece 70 in the circumferential direction are fixed surfaces 70b and 70d, each extending in the axial direction. The fixed surfaces 70b and 70d are inclined to a circumferential center from an outer peripheral surface 70a to an inner peripheral surface 70c of the connecting piece 70 along the radial direction of the body 10.

When the bearing 101 is assembled, the fixed piece 51 of the fixing device 50 and the connecting piece 70 are fixed to the inner peripheral surface 11a of the body 10, and thereafter, similarly to the first embodiment, the bearing plate pieces 20 and 30 are disposed, and each of the movable pieces 52, 53, and 54 is press-fitted. Accordingly, a plurality of the bearing plate pieces 20 and 30 disposed in one corresponding row in the circumferential direction can be fastened by the fixing device 50 and the connecting piece 70.

In addition, in the present embodiment, the upper plate pieces 40 are individually fixed to the body 10 using bolts (not illustrated).

In such a manner, the bearing may have a configuration in which only one fixing device is provided, as long as the fixed surfaces capable of supporting a plurality of the bearing plate pieces 20 and 30 pressed in the circumferential direction by the fixing device 50 are provided. For example, the member having the fixed surface may be a guide plate piece.

### {Third embodiment}

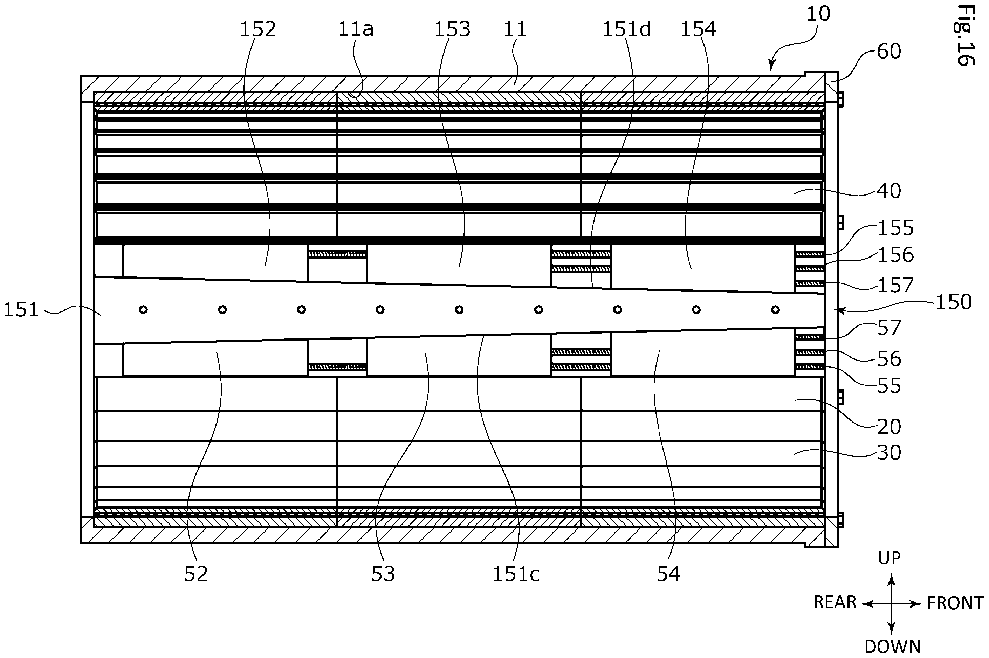

Next, a bearing according to a third embodiment of the present invention will be described with reference to FIG. 16. Incidentally, the description of configurations that are the same as and overlap with the configurations of the first embodiment will be omitted.

In the bearing of the third embodiment, a fixing device 150 and the connecting piece 70 (refer to FIG. 15) are disposed on the inner periphery of the body 10 to face each other.

The fixing device 150 is composed of a fixed piece 151, the movable pieces 52, 53, and 54, the bolts 55, 56, and 57, movable pieces 152, 153, and 154 on the opposite side, and bolts 155, 156, and 157 on the opposite side.

The fixed piece 151 has the inclined surface 51d and an inclined surface 151d. The inclined surface 151d is provided on the circumferential counterclockwise side of the fixed piece 51 when viewed from the axial front side.

The rear movable piece 152 on the opposite side has a shape that is a mirror image of the rear movable piece 52. The other movable pieces 153 and 154 on the opposite side have shapes that are mirror images of the other movable pieces 53 and 54, respectively.

Accordingly, similarly to the method for assembling a bearing described above, by moving each of the movable pieces 52, 53, and 54 toward the axial rear side relative to the fixed piece 151, a plurality of the bearing plate pieces 20 and 30 disposed between the fixed piece 151 and the fixed surface 70b of the connecting piece 70 can be fastened.

In addition, by moving the movable pieces 152, 153, and 154 on the opposite side toward the axial rear side relative to the fixed piece 151, a plurality of the upper plate pieces 40 disposed between the fixed piece 151 and the fixed surface 70d of the connecting piece 70 can be fastened.

In such a manner, one fixing device may have a configuration in which the corresponding movable pieces are provided on each of both circumferential sides of the fixed piece. Similarly, a configuration in which a plurality of the fixed pieces are provided may also be employed. For example, similarly to the fixed piece 151, inclined surfaces may be disposed on both circumferential sides of the fixed piece 51 and the fixed piece on the opposite side which has a mirror image of the fixed piece 51.

The embodiments of the present invention have been described above with reference to the drawings; however, the specific configurations are not limited to the embodiments, and changes or additions that are made without departing from the scope of the present invention are included in the present invention.

For example, in the first, second, and third embodiments, the shaft supported by the bearing has been described as a rotating shaft; however, the present invention is not limited thereto, and the shaft may be a fixed shaft.

In addition, in the first, second, and third embodiments, the one axial side and the other axial side of the present invention have been described as the axial rear side and the axial front side, respectively; however, the present invention is not limited thereto, and the one axial side may be an axial left side or an axial upper side, and may be changed as appropriate.

In addition, in the first, second, and third embodiments, the fixing device has been described as including the fixed piece serving as a first member and the movable pieces serving as second members; however, the present invention is not limited thereto, and both the first member and the second members may be movable in the axial direction. For example, the circumferential width may be expandable by forming the body in a tubular shape, and press-fitting the first member and the second member from the one axial side and the other axial side, respectively.

In addition, in the first embodiment, the configuration in which two fixing devices are disposed to face each other in the radial direction, in other words, are disposed at the 3 o'clock and 9 o'clock positions on a watch has been described; however, the present invention is not limited thereto, and the two fixing devices may be disposed at the 4 o'clock and 8 o'clock positions, and the disposition locations may be changed as appropriate. In addition, three or more fixing devices may be disposed, for example, at the 4 o'clock, 8 o'clock and 12 o'clock positions.

In addition, in the first, second, and third embodiments, the fixing device has been described as including a movable piece corresponding to each row; however, the present invention is not limited thereto, and the fixing device may include a plurality of movable pieces for one row, or may be changed as appropriate.

In addition, in the first, second, and third embodiments, the fixing device has been described as including a moving piece corresponding to each row; however, the present invention is not limited thereto, and the fixing device may include one movable piece for a plurality of rows.

In addition, in the first, second, and third embodiments, the fixing device has been described as being configured such that the inclination angles of the inclined surfaces of the movable pieces and the inclined surface of the fixed piece are the same; however, the present invention is not limited thereto, and the respective inclination angles may be different.

In addition, in the first, second, and third embodiments, both the inclined surfaces of the movable pieces and the inclined surface of the fixed piece have been described as having a planar shape; however, the present invention is not limited thereto, and these inclined surfaces may have a curved shape, one inclined surface may be formed in a wavy shape or a stepped shape, and these inclined surfaces may be changed as appropriate. The same applies to the fixed surface.

In addition, in the first, second, and third embodiments, the configuration in which the fixed surfaces of the movable pieces are brought into surface contact with the adjacent bearing plate pieces has been described; however, the present invention is not limited thereto, and a configuration in which the fixed surfaces are brought into line contact therewith may be employed. In such a configuration, it is preferable that the number and positions of the movable pieces to be disposed such that the bearing plate pieces can be prevented from tilting or rotating due to being pressed are adjusted.

In addition, in the first, second, and third embodiments, the configuration in which the bolt attached to the movable piece is struck with a hammer or the like to press-fit the movable piece has been described; however, the present invention is not limited thereto, and the method may be changed as appropriate.

In addition, in the first, second, and third embodiments, each of the bearing plate pieces has been described as including the base member, the elastic member, and the sliding member; however, the present invention is not limited thereto, and other configurations may be changed as appropriate as long as each of the bearing plate pieces includes at least the sliding member. In addition, the sliding member may have an elastic force or rigidity.

In addition, in the first, second, and third embodiments, the configuration in which the bearing plate pieces are disposed in three rows in the axial direction has been described; however, the present invention is not limited thereto, and the bearing plate pieces may be disposed in one row in the axial direction or may be disposed in a plurality of rows other than three rows.

In addition, in the first, second, and third embodiments, the bearing has been described as including the bearing plate pieces, the guide plate piece, and the upper bearing plate pieces; however, the present invention is not limited thereto, and the type thereof may be changed as appropriate.

In addition, in the first, second, and third embodiments, the configuration in which the bearing plate pieces, the guide plate piece, and the upper bearing plate pieces have substantially the same axial dimension has been described; however, the present invention is not limited thereto, and the axial dimensions may be different. In addition, even when the bearing plate pieces are of the same type, the axial dimensions may be different. The same applies to the radial dimension and the circumferential dimension.

In addition, in the first, second, and third embodiments, the configuration in which one cutout portion serving as an engagement portion is formed in each of the bearing plate pieces has been described; however, the present invention is not limited thereto, and a plurality of the cutout portions may be formed. In such a configuration, since the number of directions in which the engagement portions are accessible when the bearing plate pieces are removed can be increased, the efficiency of work can be improved.

In addition, in the first, second, and third embodiments, the configuration in which a recess is formed in the body and protrusions are formed on the guide plate piece has been described; however, the present invention is not limited thereto, and protrusions may be formed on the body and a recess may be formed in the guide plate piece.

In addition, in the first, second, and third embodiments, the configuration in which the guide groove is formed at the lower portion of the base portion and the lower right portion when viewed from the axial front side has been described; however, the present invention is not limited thereto, the guide groove may be formed at any position in the circumferential direction, and a plurality of the guide grooves may be formed.

### {REFERENCE SIGNS LIST}

1 Bearing
3 Rotating shaft
10 Body
11b Guide groove (recess)
20, 30, 40 Bearing plate piece
21b, 31b, 41b Cutout portion (engagement portion)
34 Guide pin (protrusion)
50 Fixing device
51 Fixed piece (first member)
51d Inclined surface
52, 53, 54 Movable piece (second member)
52d, 53d, 54d Inclined surface
70 Connecting piece
101 Bearing
150 Fixing device
151 Fixed piece (first member)
151d Inclined surface
152, 153, 154 Movable piece (second member)
G Gap
L1 Axial dimension of bearing plate piece
L2 Axial dimension of movable piece

## Claims

1. A bearing, comprising:
a body having a tubular shape;
a plurality of bearing plate pieces arranged in a circumferential direction on an inner periphery of the body; and
a fixing device disposed on the inner periphery of the body,
wherein the fixing device includes a first member having an inclined surface that is inclined with respect to an axial direction in a radial directional view, and a second member configured for moving along the inclined surface of the first member and pressing the bearing plate pieces.

2. The bearing according to claim 1,
wherein the second member has an inclined surface facing the inclined surface of the first member, and a surface that is provided on a side opposite to the inclined surface of the second member in the circumferential direction, and that is parallel to a surface on a second member side of the bearing plate piece adjacent to the second member, and
the inclined surface of the second member is equal to the inclined surface of the first member in inclination angle with respect to the axial direction.

3. The bearing according to claim 1,
wherein the first member is fixed to the body.

4. The bearing according to claim 1,
wherein the second member has a shorter axial length than the bearing plate pieces.

5. The bearing according to claim 1,
wherein a plurality of the second members are arranged in an axial direction, and are individually movable in the axial direction.

6. The bearing according to claim 5,
wherein the bearing plate pieces are provided in a plurality of rows in the axial direction, and
the second member is provided for each row of the bearing plate pieces.

7. The bearing according to any one of claims 1 to 6,
wherein the fixing device has a circumferential width that is changeable by moving the second member relative to the first member in the axial direction.
